# EUROPÄISCHE PATENTSCHRIFT

(11) **EP 1 370 847 B1**
(45) Veröffentlichungstag und Bekanntmachung des Hinweises auf die Patenterteilung: **08.12.2004**
(21) Anmeldenummer: 02721992.2
(22) Anmeldetag: 27.02.2002
(51) Int. Cl.: G01N 15/02, G01N 21/15

(54) **MESSSONDE ZUR IN-LINE-BESTIMMUNG DER GRÖSSE VON BEWEGTEN PARTIKELN IN TRANSPARENTEN MEDIEN**
MEASURING HEAD FOR IN LINE DETERMINATION OF THE SIZE OF MOVING PARTICLES IN TRANSPARENT MEDIA
SONDE DE MESURE POUR DETERMINER EN LIGNE LA TAILLE DE PARTICULES EN MOUVEMENT DANS DES SUBSTANCES TRANSPARENTES

(30) Priorität: 02.03.2001 DE 10110066
(43) Veröffentlichungstag der Anmeldung: 17.12.2003
(73) Patentinhaber: Parsum -Gesellschaft für Partikel-, Strömungs- und Umweltmesstechnik mbH, 09125 Chemnitz (DE)
(72) Erfinder: ECKARDT, Günter, 09116 Chemnitz (DE); DIETRICH, Stefan, 09128 Chemnitz (DE); KÖHLER, Michael, 09353 Oberlungwitz (DE)
(74) Vertreter: NOSPAT Patentanwälte - Naefe Oberdorfer Schmidt
(86) Internationale Anmeldenummer: PCT/DE2002/000784
(87) Internationale Veröffentlichungsnummer: WO 2002/071034

(56) Entgegenhaltungen:
- WO-A-87/05108
- GB-A- 2 274 332
- BLACK D L ET AL: "Laser-based techniques for particle-size measurement: a review of sizing methods and their industrial applications" PROGRESS IN ENERGY AND COMBUSTION SCIENCE, ELSEVIER SCIENCE PUBLISHERS, AMSTERDAM, NL, Bd. 22, Nr. 3, 1996, Seiten 267-306, XP004068954 ISSN: 0360-1285

## Beschreibung

Die Erfindung betrifft eine Meßsonde zur in-line-Bestimmung der Größe von bewegten Partikeln in transparenten Medien, mit einem rohrförmigen Meßsondenkörper, der im Bereich seines vorderen, im Meßraum befindlichen Endes einen einseitig offenen, parallelwandigen Durchbruch für die Aufnahme einer optischen Meßstelle mit zwei Meßfenstem aufweist, bestehend aus einer in einer Durchbruchwand angeordneten Beleuchtungseinrichtung und einer im Strahlengang in der gegenüber befindlichen Durchbruchwand vorgesehenen Lichtempfangsanordnung, die mit einer optoelektronischen Wandleranordnung in Verbindung steht, wobei sich die Partikelströmung zwischen Beleuchtungseinrichtung und Lichtempfangsanordnung befindet, unter Verwendung einer Spüleinrichtung für die Reinigung der optischen Meßstelle, wobei die Spüleinrichtung aus einer Quelle eines Spülmediums, einem im Inneren des rohrförmigen Meßsondenkörpers bis zum Durchbruch führenden Kanal für die Zuleitung des Spülmediums und Austrittsöffnungen im Bereich des Durchbruchs besteht

Das Anwendungsgebiet der Erfindung ist die berührungslose Ermittlung der Größe von Partikeln, d. h. von festen, flüssigen und/oder gasförmigen Teilchen, die sich in strömenden Flüssigkeiten oder Gasen befinden oder die sich in einem transparenten Medium bzw. im Vakuum selbst bewegen. Beispiele seien disperse Mehrphasenströmungen, z. B. Staub-, Suspensions- oder Aerosolströmungen, wobei im Rahmen mehr oder weniger komplexer technologischer Prozesse die Teilchengröße ohne Probennahme mit einer hohen Datenrate bestimmbar ist.

Gemäß DE 196 28 348 C1 und DE 298 04 156 U1 ist bereits eine derartige Meßsonde bekannt. Sie besteht aus einem rohrförmigen Meßsondenkörper, der in ein Partikeln führendes Medium eingebracht werden kann. Am Ende des Meßsondenkörpers befindet sich ein parallelwandiger Durchbruch, der einseitig offen ist, und dem eine optische Meßstelle zugeordnet ist Diese weist zwei im Durchbruch gegenüber befindliche Meßfenster auf, wobei ein Meßfenster eine Beleuchtungseinrichtung und das andere Meßfenster als Lichtempfangsanordnung eine Ortsfrequenzfilteranordnung mit einem zusätzlichen lichtwellenleitenden Element schützt. Diese Ortsfrequenzfilteranordnung ist ausgangsseitig auf eine optoelektronische Wandieranordnung geführt, so daß beim Passieren von Partikeln durch das durch die Beleuchtungseinrichtung beleuchtete Meßvolumen im Durchbruch des Meßsondenkörpers einerseits ein wechselspannungsartiges Ausgangssignal zur Bestimmung der Partikelgeschwindigkeit und andererseits ein Impulssignal zur Bestimmung der Partikelgröße ausgewertet werden kann.

Eine analoge Meßsonde mit einer abweichenden Lichtempfangsanordnung, die Ausgangssignale auf der Basis von Zeitmessungen gewinnt, ist aus DE 199 11 654 C1 bekannt.

Beim praktischen Einsatz dieser bekannten Meßsonden in verschiedenen Partikelströmungen hat sich gezeigt, daß insbesondere beim Vorhandensein von staubigen und/oder klebrigen Teilchen eine relativ schnelle Benetzung bzw. Verschmutzung der beiden Meßfenster der optischen Meßstelle zu verzeichnen ist. Die Meßfenster setzen sich durch die Anlage entsprechender Teilchen zu, so daß die optische Durchlässigkeit der Meßstelle in zunehmendem Maße beeinträchtigt ist. Damit sind exakte Ausgangssignale nicht mehr bestimmbar, d. h. es treten unerwünschte Meßfehler bei der Partikelgrößenbestimmung auf.

Aus DE 298 23 184 U1 ist es zwar bereits bekannt, eine optische Meßsonde zur Bestimmung der Geschwindigkeit von strömenden Fluiden mit einer Spüleinrichtung zur Reinigung der optischen Meßstelle auszurüsten. Ziel ist es dabei, von der Strömung mitgeführtes, vor allem leichtes Treibgut mit mehr oder weniger sperriger Form, wie Grashalme, Blätter usw., am Festsetzen in einer die optische Meßstelle enthaltenden Einlaufrinne eines plattenförmigen Sondenkörpers zu hindern bzw. ggf. Beschädigungen einer schneidenartigen Kante der Einlaufrinne zu vermeiden. Dabei besteht diese Spüleinrichtung aus einer ein Druckmedium führenden Leitung, welche mittig im hinteren Durchbruchsbereich der Einlaufrinne des plattenförmigen Sondenkörpers, d. h. in Strömungsrichtung gesehen nach der der Einlaufrinne zugeordneten optischen Meßstelle und gegen die Anströmungsrichtung mündet.

Diese bekannte Spüleinrichtung ist für den Einsatz in der Meßsonde zur Partikelgrößenbestimmung gemäß Gattungsbegriff nicht geeignet, da eine Reinigung und ständige Freihaltung der beiden Meßfenster der optischen Meßstelle von insbesondere angesetzten (entsprechend kleinen) Teilchen der Partikelströmung nicht vorgesehen und auch nicht möglich ist. Der gegen die Anströmrichtung gerichtete Spülstrahl wird bei in technischen Prozessen üblichen höheren Strömungsgeschwindigkeiten der Partikelströmung derart geschwächt, daß eine effektive Reinigungswirkung im genannten Sinne an den beiden Meßfenstern nicht erreichbar ist. Auch der verhältnismäßig große Abstand der Mündungsöffnung der Spüleinrichtung von den Meßfenstern wirkt sich negativ auf eine Reinigungswirkung aus. Darüber hinaus bewirkt die bekannte Anordnung der Spüleinrichtung eine Störung der Partikelströmung im Bereich der optischen Meßstelle, was zu ungenauen Meßergebnissen bezüglich der Partikelgeschwindigkeit führt.

Es ist des weiteren aus DE 44 40 417 A1 eine Meßvorrichtung zum Ermitteln eines Pulveranteils in einem Gas-Pulver-Strom bekannt, welche in eine, besagten Gas-Pulver-Strom führende Förderleitung einsetzbar ist. Sie besteht aus einem lichtdurchlässigen Gehäuse für den Gas-Pulver-Strom, welches durch die Strahlen eines Strahlensenders auf einen Strahlenempfänger zu durchquert wird. Innerhalb des Gehäuses ist ein Einsatzrohr zum Führen des Gas-Pulver-Stroms angeordnet. Dieses weist im Bereich des Strahlenganges Durchtrittsöffnungen auf. Ein zwischen Einsatzrohr und Gehäuse im Ringspalt strömender reiner Gasstrom soll das Ansetzen von Ablagerungen auf der Gehäuseinnenwand bzw. auf Lichtleitern verhindern.

Diese bekannte Vorrichtung ist insbesondere wegen des Vorsehens eines den Gas-Pulver-Strom vollständig umhüllenden reinen Gasstroms relativ aufwendig und damit teuer. Darüber hinaus sind die beschriebenen Maßnahmen zur Verhinderung von Ablagerungen an einer Meßsonde zur Partikelgrößenbestimmung gemäß Gattungsbegriff nicht einsetzbar, da hier der Partikelstrom nicht in einem geschlossenen Gehäuse (der Meßvorrichtung) geführt wird. Dem gemäß ist die Anordnung eines Ringspaltes für die Leitung eines reinen Gasstroms nicht realisierbar. Im übrigen kann der im Ringspalt strömende Gasstrom nicht die Anlagerung von Ablagerungen im Inneren des Einsatzrohres im Bereich der Durchtrittsöffnungen verhindern, so daß Meßwertverfälschungen nicht auszuschließen sind.

Darüber hinaus ist aus WO 87/05 108 A1 eine gattungsgemäße Meßsonde bekannt. Dabei besteht die der Beleuchtungseinrichtung und der Lichtempfangseinrichtung zugeordnete Spüleinrichtung für die Reinigung der optischen Meßstelle im wesentlichen aus quer zu der Oberflächen der jeweiligen Linsen verlaufenden Kanälen für die Zufuhr des Spülmediums, welche in quer zur Partikelströmung angeordneten Bohrungen für die Führung des Lichtstrahls münden.

Diese bekannte Anordnung ist allerdings mit strömungstechnischen und funktionellen Nachteilen verbunden.

In Anbetracht der Nachteile des bekannten Standes der Technik liegt der Erfindung die Aufgabe zugrunde, eine Meßsonde zur Partikelgrößenbestimmung der eingangs genannten Art zu schaffen, deren Meßfenster der optischen Meßstelle zuverlässig von Verschmutzungen bzw. Benetzungen durch Teilchen der Partikelströmung befreit bzw. ständig freigehalten werden, so daß die optische Durchlässigkeit der Meßstelle über eine hohe Standzeit gesichert und durch Teilchenablagerungen bzw. -benetzungen bedingte Meßwertverfälschungen weitestgehend vermieden sind.

Diese Aufgabe wird erfindungsgemäß gelöst durch einen in den parallelwandigen Durchbruch einsetz-, befestig- und wechselbaren Spüleinsatz, weicher im Axialschnitt durch den rohrförmigen Meßsondenkörper im Bereich des Durchbruchs dessen Querschnitt teilweise oder vollständig ergänzt, welcher weiterhin eine mit der Quelle eines Spülmediums über den Kanal und die quer zu den Meßfenstem der optischen Meßstelle mündenden Austrittsöffnung in Verbindung stehende Eingangsöffnung und zwei mit dieser verbundene Austrittsöffnungen für das Spülmedium besitzt, die jeweils quer zu den Meßfenstern von Beleuchtungseinrichtung und Lichtempfangsanordnung verlaufen.

Bei dieser erfindungsgemäß ausgestalteten Meßsonde sind die beiden Meßfenster der optischen Meßstelle ständig und zuverlässig vor Verschmutzungen bzw. Benetzungen durch Ablagerung von Teilchen der Partikelströmung geschützt, da die entsprechend im Durchbruch angeordnete und gestaltete Spüleinrichtung das ständige Aufbringen mindestens eines dünnen Spülstrahls ausreichender Strahlstärke unmittelbar tangential gerichtet über die jeweiligen Oberflächen der beiden Meßfenster gewährleistet ("Mantelströmung" in Richtung des Partikelstroms). Dementsprechend ist bereits die Entstehung von Ablagerungen auf den Meßfenstem vermieden. Andererseits z. B. durch Nichtaktivierung der Spüleinrichtung bereits entstandene Verschmutzungen oder Ablagerungen werden durch den entsprechend gerichteten Spülstrahl zuverlässig entfernt. Damit wird die optische Durchlässigkeit der Meßstelle auch bei problematischen Partikelströmungen (z. B. besonders staubige oder klebrige Produkte) über lange Standzeiten gesichert, so daß durch Verschmutzung bzw. Teilchenablagerungen verursachte Meßwertverfälschungen sowie Sichtungseffekte weitestgehend vermieden sind. Dieses ist insbesondere bei einem automatischen Langzeiteinsatz der Meßsonde von großer Bedeutung.

Die erfindungsgemäße Verwendung eines in den Durchbruch des rohrförmigen Meßsondenkörpers einsetzbaren und auswechselbaren Spüleinsatzes erlaubt einen universellen Einsatz der Meßsonde sowie eine erhebliche Verbesserung der Reinigungswirkung im Bereich der beiden Meßfenster der optischen Meßstelle. Insbesondere der Spüfstrahl ist bezüglich seiner Strahlrichtung und -intensität relativ zur Partikelflugbahn genau vorwähl- und definierbar, so daß optimale Ergebnisse erzielbar sind. Durch leichte Wechselbarkeit des Spüleinsatzes ist dessen ggf. erforderliche Reinigung ohne großen Montage- und sonstigen Aufwand möglich.

Vorrangig für den Einsatz in Partikelströmungen mit größeren Teilchen ist es zweckmäßig, daß der Spüleinsatz bei teilweiser Querschnittsergänzung des rohrförmigen Meßsondenkörpers im Bereich des Durchbruchs eine die Eingangsöffnung aufweisende innere Begrenzungsfläche, die an der inneren Fläche des parallelwandigen Durchbruchs anliegt, und eine zu dieser parallel verlaufende äußere Begrenzungsfläche aufweist, deren Mittenabstand zur Längsachse des rohrförmigen Meßsondenkörpers kleiner ist als der Mittenabstand der Lichtempfangsanordnung, und wobei in beiden stimseitigen Wänden des Spüleinsatzes je ein mit der Eingangsöffnung verbundener Austrittskanal für das Spülmedium angeordnet ist, dessen Austrittsöffnung jeweils eine Strahlrichtung des Spülstrahls bestimmt, die einen spitzen Winkel zur Richtung der Partikelströmung einschließt

Zweckmäßig ist dabei die parallel verlaufende äußere Begrenzungsfläche des Spüleinsatzes parallel zur Partikelströmung z. B. rinnenförmig profiliert, um eine günstigere Ausrichtung der Partikelflugbahn zu erzielen.

Insbesondere für den Einsatz in Partikelströmungen mit kleineren Teilchen ist es vorteilhaft, daß der Spüleinsatz bei vollständiger Querschnittsergänzung des rohrförmigen Meßsondenkörpers im Bereich des Durchbruchs eine die Eingangsöffnung aufweisende innere Begrenzungsfläche, die an der inneren Fläche des parallelwandigen Durchbruchs anliegt, und eine querschnittsergänzende äußere Begrenzungsfläche aufweist, wobei der Spüleinsatz einen diesen durchdringenden, parallel zur inneren Begrenzungsfläche und querfluchtend zur Wirkungsrichtung der Meßfenster von Beleuchtungseinrichtung und Lichtempfangsanordnung verlaufenden Partikelführungskanal besitzt, der jeweils im Bereich der Meßfenster diesen zugeordnete, den Spüleinsatz durchdringende Öffnungen hat, und wobei in beiden stimseitigen Wänden des Spüleinsatzes je ein mit der Eingangsöffnung verbundener Austrittskanal für das Spülmedium angeordnet ist, der parallel zum Partikelführungskanal verläuft und quer an den Meßfenstem vorbeiführt.

Dabei ist es besonders vorteilhaft, wenn in den Austrittskanälen für das Spülmedium Drosseldüsen vorgesehen sind, deren Querschnittsverengungen - in Richtung der Strömung des Spülmediums gesehen - jeweils vor den Meßfenstern angeordnet sind. Diese Drosseldüsen wirken als Injektor, d. h. die Partikelströmung wird im Bereich der Meßfenster beschleunigt, so daß insbesondere durch Vereinzelung der Partikeln einer Partikelströmung höherer Teilchendichte bessere Meßergebnisse erzielbar sind. Andererseits ist durch die düsenbedingte Erhöhung der Strömungsgeschwindigkeit des Spülmediums eine weitere Verbesserung der Reinigungswirkung erreichbar.

Zweckmäßigerweise erzeugt die Quelle des Spülmediums einen geeigneten Überdruck des Spülmediums relativ zum Druck des die Partikel führenden Mediums, um einen wirksamen Spülstrahl zu erzielen.

Zweckmäßig ist es weiterhin, daß das Spülmedium aus einem Druckgas, aus einer Druckflüssigkeit oder aus einem mit einer Druckflüssigkeit versetzten Druckgas (bzw. umgekehrt) besteht. Besonders einfach und effektiv ist die Anwendung von Druckluft als Spülmedium.

Zwecks Vermeidung des Rückschlagens von unter Druck stehendem, die Partikel führendem Medium ist günstigerweise im Kanal für die Zuleitung des Spülmediums ein Rückschlagventil angeordnet.

Die Erfindung wird nachfolgend an einigen Ausführungsbeispielen näher erläutert. In der zugehörigen Zeichnung zeigen:
- Fig. 1: die perspektivische Ansicht eines ersten Ausführungsbeispiels mit einem zum Einsatz vorbereiteten Spüleinsatz,
- Fig. 2: die Seitenansicht zu Fig. 1 mit eingesetztem Spüleinsatz,
- Fig. 3: den Schnitt nach Linie III - III in Fig. 2,
- Fig. 4: die perspektivische Ansicht eines zweiten Ausführungsbeispiels mit einem anderen zum Einsatz vorbereiteten Spüleinsatz,
- Fig. 5: die Seitenansicht zu Fig. 4 mit eingesetztem Spüleinsatz,
- Fig. 6: den Schnitt nach Linie VI - VI in Fig. 5.

Die Meßsonde besteht aus einem Gehäuse (nicht dargestellt) für die Aufnahme u. a. einer Lichtquelle, von elektronischen und elektrischen Bauteilen sowie von einer Quelle eines Spülmediums. An das Gehäuse ist ein rohrförmiger Meßsondenkörper 1 befestigt, dessen vorderes Ende 1.1 in einen Meßraum hineinragen kann. In diesem Meßraum befindet sich eine Partikelströmung 2, beispielsweise in einer Rohrleitung, wobei die Größe der bewegten Partikeln bestimmt werden soll.

Der rohrförmige Meßsondenkörper 1 enthält im Bereich seines vorderen Endes 1.1 einen einseitig offenen, parallelwandigen Durchbruch 3 mit zwei Durchbruchwänden 3.1 und 3.2 sowie einer inneren Fläche 3.3. Der Durchbruch 3 dient der Aufnahme einer optischen Meßstelle. Diese weist zwei einander gegenüber angeordnete Meßfenster 4, 5 auf, wobei sich das Meßfenster 4 in der Durchbruchwand 3.1 befindet und die Austrittsöffnung einer Beleuchtcingseinrichtung darstellt, welche mit der im Gehäuse angeordneten Lichtquelle (nicht gezeichnet) in Verbindung steht. Demgemäß tritt bei Aktivierung der Lichtquelle ein paralleler Lichtstrahl 6 aus dem Meßfenster 4 aus.

Das in der.Durchbruchwand 3.2 befindliche Meßfenster 5 schützt eine aus DE 196 28 348 C1 bekannte Ortsfreouenzfilteranordnung mit einem zusätzlichen lichtwellenleitenden Element (nicht gezeichnet), welche ausgangsseitig auf eine optoelektronische Wandleranordnung geführt ist. Gemäß der Anordnung werden die sich durch den parallelwandigen Durchbruch 3 (Meßvolumen) bewegenden Partikeln der Partikelströmung 2 durch den Lichtstrahl 6 beleuchtet, wobei sich entsprechende Schattenbilder auf dem Meßfenster 5 bzw. auf der optischen Wirkungsfläche der erwähnten Ortsfrequenzfilteranordnung abbilden, so daß die bekannten Signale zur Teilchengrößenbestimmung auswertbar sind.

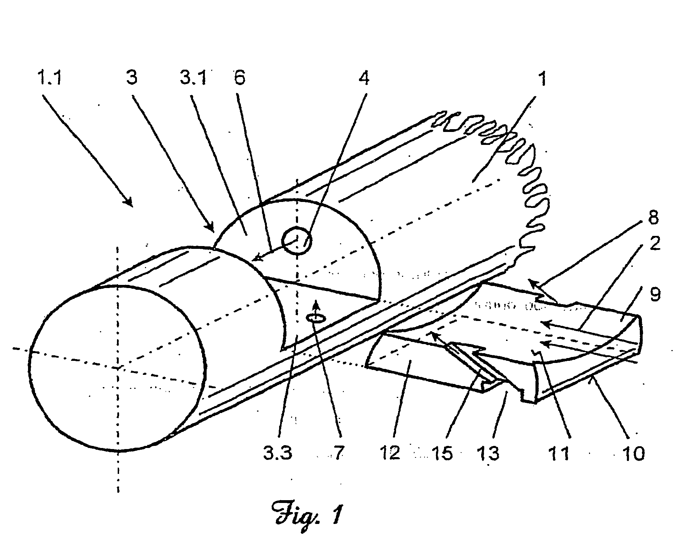

Im ersten Ausführungsbeispiel einer Spüleinrichtung für die Meßfenster 4, 5 der optischen Meßstelle (Fig. 1 - 3) besteht diese aus der bereits erwähnten und im Gehäuse angeordneten Quelle eines Spülmediums, z. B. einem (nicht dargestellten) Druckluftanschluß, der über ein nicht gezeichnetes Rückschlagventil (zur Vermeidung von durch den Druck der Partikelströmung 2 verursachte Rückwirkungen) mit einem im Inneren befindlichen und sich längs des rohrförmigen Meßsondenkörpers 1 erstreckenden Kanal 14 verbunden ist Dieser Kanal 14 führt bis zum parallelwandigen Durchbruch 3 und mündet dort in eine Austrittsöffnung 7.

Gemäß dem ersten Ausführungsbeispiel (Fig. 1 - 3) weist die Spüleinrichtung einen Spüleinsatz 9 auf, der in den parallelwandigen Durchbruch 3 einsetzund auf geeignete Weise befestigbar sowie bei Erfordernis auswechselbar ist. Wie insbesondere aus Fig. 3 ersichtlich, wird durch den Querschnitt des Spüleinsatzes 9 der halbkreisförmige Querschnitt des rohrförmigen Meßsondenkörpers 1 im Bereich des parailelwandigen Durchbruchs 3 teilweise ergänzt.

Der Spüleinsatz 9 weist eine innere Begrenzungsfläche 10 auf, welche an der inneren Fläche 3.3 des Durchbruchs 3 anliegt, sowie eine zu dieser im wesentlichen parallele äußere Begrenzungsfläche 11 und zwei stimseitige Wände 12. Die äußere Begrenzungsfläche 11 ist parallel zur Partikelströmung 2 z. B. gemäß einer Teilzylinderaußenfläche rinnenförmig profiliert, um eine günstige Ausrichtung der Partikelflugbahn relativ zu den Meßfenstern 4, 5 zu erreichen. Der Mittenabstand der äußeren Begrenzungsfläche 11 von der Längsachse des rohrförmigen Meßsondenkörpers 1 ist kleiner als der Mittenabstand der Gitterachse der Ortsfrequenzfilteranordnung hinter dem Meßfenster 5, so daß beim Meßvorgang der Lichtstrahl 6 ungehindert vom Spüleinsatz 9 die Ortsfrequenzfilteranordnung treffen kann.

In der inneren Begrenzungsfläche 10 des Spüleinsatzes 9 ist eine parallel zur Breite des Spüleinsatzes 9 bzw. des Durchbruchs 3 verlaufende Nut 13 (als Eingangsöffnung für das Spülmedium) angeordnet, in welcher die mit dem Kanal 14 verbundene Austrittsöffnung 7 mündet. In den stimseitigen Wänden 12 sind weiterhin Austrittskanäle 15 für das Spülmedium eingearbeitet, welche einerseits in der Nut 13 und andererseits in der äußeren Begrenzungsfläche im Bereich jeweils der Meßfenster 4, 5 münden. Die Anordnung der Austrittskanäle 15 relativ zu den Meßfenstem 4, 5 bestimmt jeweils einen Spülstrahl 8, dessen Strahlrichtung einen spitzen Winkel zur Partikelströmung 2 einschließt.

Bei Zufuhr des Spülmediums über den Kanal 14 tritt dieses über die Austrittsöffnung 7 in die Nut 13 des Spüleinsatzes 9 und von dort durch die beiden Austrittskanäle 15 so aus, daß entsprechend dünne Spülstrahlen 8 jeweils quer über die Oberflächen der Meßfenster 4, 5 streichen. Der spitze Winkel zwischen Strahlrichtung von Spülstrahl 8 und Richtung der Partikelströmung 2 führt zu einer Verbesserung der Reinigungswirkung des Spülstrahls 8, da das Spülmedium durch die Partikelströmung 2 in Richtung auf die Meßfenster 4, 5 beschleunigt wird.

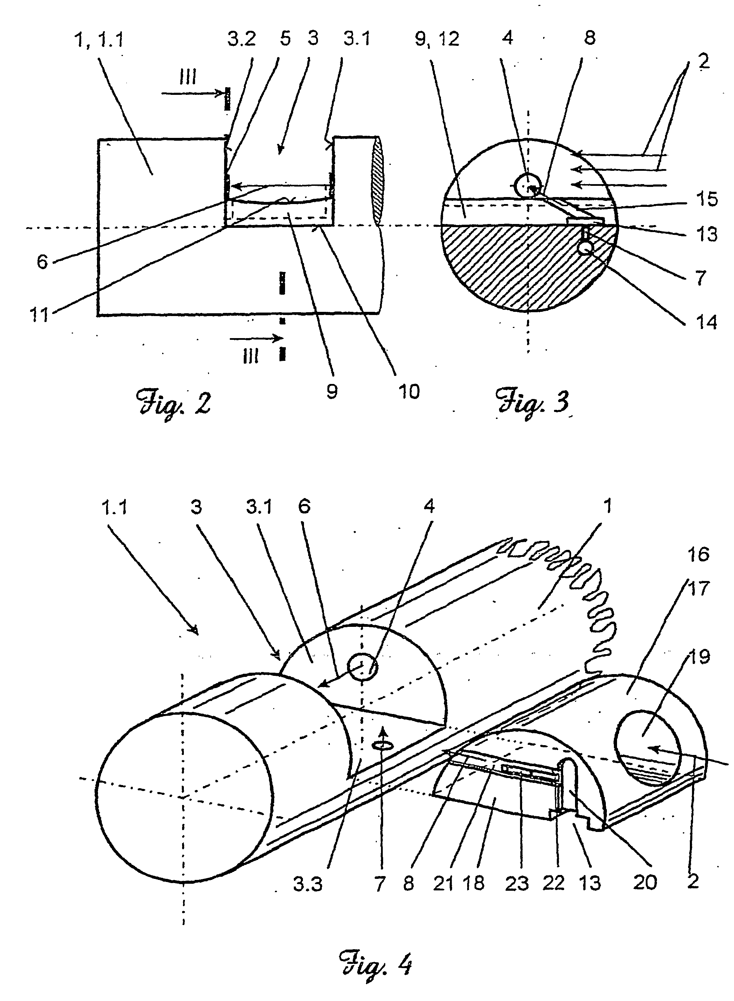

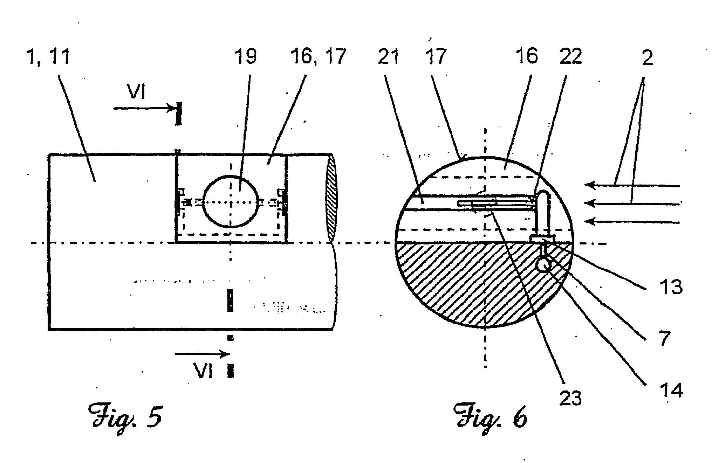

Entsprechend des zweiten Ausführungsbeispiels (Fig. 4 - 6) ist die Spüleinrichtung mit einem anderen Spüleinsatz 16 ausgestattet, der allerdings gleichfalls in den parallelwandigen Durchbruch 3 einsetz-, befestigbar und auswechselbar ist. Aus Fig. 6 ist ersichtlich, daß der halbkreisförmige Querschnitt des rohrförmigen Meßsondenkörpers 1 im Bereich des Durchbruchs 3 vollständig ergänzt ist, d. h. der Durchbruch 3 ist vollständig durch den Spüleinsatz 16 ausgefüllt.

Der Spüleinsatz 16 weist gleichfalls eine innere Begrenzungsfläche 10 auf, die an der inneren Fläche 3.3 des Durchbruchs 3 anliegt. Die äußere Begrenzungsfläche 17 des Spüleinsatzes 16 entspricht jedoch aus vorstehendem Grunde der (im Bereich des Durchbruchs 3 an sich unterbrochenen) zylindrischen Mantelfläche des rohrförmigen Meßsondenkörpers 1. Die beiden stimseitige Wände 18 des Spüleinsatzes 16 sind im wesentlichen den anliegenden Durchbruchwänden 3.1, 3.2 analog.

Der Spüleinsatz 16 ist des weiteren durch einen Partikelführungskanal 19 durchdrungen. Dieser verläuft parallel zur inneren Begrenzungsfläche 10 bzw. zur inneren Fläche 3.3 des parallelwandigen Durchbruchs 3 und quer zur Wirkungsrichtung des Lichtstrahls 6, da üblicherweise der rohrförmige Meßsondenkörper 1 hinsichtlich der Flächen seines Durchbruchs 3 entsprechend zur Richtung der Partikelströmung 2 ausgerichtet wird. Demgemäß wird vermittels des Partikelführungskanals 19 der Spüleinsatz 16 von der Partikelströmung 2 durchströmt.

Zwecks Zuleitung des Spülmediums weist auch der Spüleinsatz 16 in seiner inneren Begrenzungsfläche 10 eine Nut 13 auf, in der die Austrittsöffnung 7 mündet. In der Nut 13 endet je ein in jede stimseitige Wand 18 eingearbeiteter Zufuhrkanal 20, der je mit einem Austrittskanal 21 verbunden ist. Diese Austrittskanäle 21 verlaufen parallel zum Partikelführungskanal 19 quer an den Meßfenstem 4, 5 vorbei und münden im Bereich des Ausgangs des Durchbruchs 3.

In jedem Austrittskanal 21 ist eine Drosseldüse 22 angeordnet. Deren Querschnittsverengung befindet sich - in Richtung der Strömung des Spülmediums gesehen - jeweils vor den Meßfenstern 4, 5.

Zur Ermöglichung des Durchtritts des Lichtstrahls 6 ist des weiteren in jedem Austrittskanal 21, d. h: beidseitig zum Partikelführungskanal 19, je eine den Spüleinsatz 16 im Bereich der Meßfenster 4, 5 durchdringende Öffnung 23 eingearbeitet, die vorzugsweise die Form eines Spaltes besitzt, der sich fluchtend zur Gitterachse der Ortsfrequenzfilteranordnung erstreckt.

Wird bei dieser Ausführungsform das Spülmedium über den Kanal 14 und die Austrittsöffnung 7 zugeführt, so strömt es vermittels der Nut 13 durch beide Zufuhrkanäle 20 zu den Austrittskanälen 21. Unter der Wirkung der dort angeordneten Drosseldüsen 22 wird die Strömung des Spülmediums beschleunigt, so daß eine (weitere) Verbesserung der Reinigungswirkung durch den Spülstrahl 8 bezüglich der Oberflächen der Meßfenster 4, 5 erzielbar ist. Zusätzlich wirkt diese Anordnung der Drosseldüsen 22 jeweils als Injektor, d. h. die Partikelströmung 2 wird im Partikelführungskanal 19 im Bereich der Öffnungen 23 neben den Meßfenstem 4, 5 beschleunigt. Dadurch können insbesondere bei Partikelströmungen höherer Teilchendichte durch eine zusätzliche Dispergierwirkung genauere Meßergebnisse erreicht werden.

In den vorstehenden Ausführungsbeispielen wurde als Spülmedium Druckluft verwendet, welche einen geeigneten Überdruck relativ zum Druck der Partikelströmung 2 aufweist. In gleicher Weise und abhängig vom konkreten Einsatzfall kann auch ein anderes Druckgas oder eine Druckflüssigkeit als Spülmedium Verwendung finden. Dabei liegt die Verwendung des Mediums der Partikelströmung 2 als Spülmedium nahe. Gleichfalls ist die Verwendung von mit Druckflüssigkeit versetztem Druckgas (bzw. umgekehrt) möglich.

Die Erfindung ist nicht durch Einzelheiten der vorstehenden Ausführungsbeispiele beschränkt. Insbesondere kann die Lichtempfangsanordnung auch in anderer geeigneter Weise, z. B. gemäß DE 199 11 654 C1 ausgeführt sein.

### Bezugszeichenliste

- 1: Meßsondenkörper
- 1.1: vorderes Ende
- 2: Partikelströmung
- 3: Durchbruch
- 3.1: Durchbruchwand
- 3.2: Durchbruchwand
- 3.3: innere Fläche
- 4: Meßfenster
- 5: Meßfenster
- 6: Lichtstrahl
- 7: Austrittsöffnung
- 8: Spülstrahl
- 9: Spüleinsatz
- 10: innere Begrenzungsfläche
- 11: äußere Begrenzungsfläche
- 12: stimseitige Wand
- 13: Nut
- 14: Kanal
- 15: Austrittskanal
- 16: Spüleinsatz
- 17: äußere Begrenzungsfläche
- 18: stimseitige Wand
- 19: Partikelführungskanal
- 20: Zufuhrkanal
- 21: Austrittskanal
- 22: Drosseldüse
- 23: Öffnung

## Patentansprüche

1. Meßsonde zur in-line-Bestimmung der Größe von bewegten Partikeln in transparenten Medien, mit einem rohrförmigen Meßsondenkörper (1), der im Bereich seines vorderen, im Meßraum befindlichen Endes einen einseitig offenen, parallelwandigen Durchbruch (3) für die Aufnahme einer optischen Meßstelle mit zwei Meßfenstern (4, 5) aufweist, bestehend aus einer in einer Durchbruchwand angeordneten Beleuchtungseinrichtung und einer im Strahlengang in der gegenüber befindlichen Durchbruchwand vorgesehenen Lichtempfangsanordnung, die mit einer optoelektronischen Wandleranordnung in Verbindung steht, wobei sich die Partikelströmung zwischen Beleuchtungseinrichtung und Lichtempfangsanordnung befindet, unter Verwendung einer Spüleinrichtung für die Reinigung der optischen Meßstelle, wobei die Spüleinrichtung aus einer Quelle eines Spülmediums, einem im Inneren des rohrförmigen Meßsondenkörpers bis zum Durchbruch führenden Kanal für die Zuleitung des Spülmediums und Austrittsöffnungen im Bereich des Durchbruchs besteht,
**gekennzeichnet durch** einen in den parallelwandigen Durchbruch (3) einsetz-, befestig- und wechselbaren Spüleinsatz (9; 16), welcher im Axialschnitt **durch** den rohrförmigen Meßsondenkörper (1) im Bereich des Durchbruchs (3) dessen Querschnitt teilweise oder vollständig ergänzt, welcher weiterhin eine mit der Quelle eines Spülmediums über den Kanal (14) und die quer zu den Meßfenstern (4; 5) der optischen Meßstelle mündenden Austrittsöffnung (7) in Verbindung stehende Eingangsöffnung (13) und zwei mit dieser verbundene Austrittsöffnungen (15; 21) für das Spülmedium besitzt, die jeweils quer zu den Meßfenstem (4; 5) von Beleuchtungseinrichtung und Lichtempfangsanordnung verlaufen.

2. Meßsonde nach Anspruch 1, **dadurch gekennzeichnet, daß** der Spüleinsatz (9) bei teilweiser Querschnittsergänzung des rohrförmigen Meßsondenkörpers (1) im Bereich des Durchbruchs (3) eine die Eingangsöffnung (13) aufweisende innere Begrenzungsfläche (10), die an der inneren Fläche (3.3) des parallelwandigen Durchbruchs (3) anliegt, und eine zu dieser parallel verlaufende äußere Begrenzungsfläche (11) aufweist, deren Mittenabstand zur Längsachse des rohrförmigen Meßsondenkörpers (1) kleiner ist als der Mittenabstand der Lichtempfangsanordnung, und wobei in beiden stimseitigen Wänden (12) des Spüleinsatzes (9) je ein mit der Eingangsöffnung (13) verbundener Austrittskanal (15) für das Spülmedium angeordnet ist, dessen Austrittsöffnung jeweils eine Strahlrichtung des Spülstrahls (8) bestimmt, die einen spitzen Winkel zur Richtung der Partikelströmung (2) einschließt.

3. Meßsonde nach Anspruch 2, **dadurch gekennzeichnet, daß** die parallel verlaufende äußere Begrenzungsfläche (11) des Spüleinsatzes (9) parallel zur Partikelströmung (2) profiliert ist.

4. Meßsonde nach Anspruch 1, **dadurch gekennzeichnet, daß** der Spüleinsatz (16) bei vollständiger Querschnittsergänzung des rohrförmigen Meßsondenkörpers (1) im Bereich des Durchbruchs (3) eine die Eingangsöffnung (13) aufweisende innere Begrenzungsfläche (10), die an der inneren Fläche (3.3) des parallelwandigen Durchbruchs (3) anliegt, und eine querschnittsergänzende äußere Begrenzungsfläche (17) aufweist, wobei der Spüleinsatz (16) einen diesen durchdringenden, parallel zur inneren Begrenzungsfläche (10) und querfluchtend zur Wirkungsrichtung der Meßfenster (4; 5) von Beleuchtungseinrichtung und Lichtempfangsanordnung verlaufenden Partikelführungskanal (19) besitzt, der jeweils im Bereich der Meßfenster (4; 5) diesen zugeordnete, den Spüleinsatz (16) durchdringende Öffnungen (23) hat, und wobei in beiden stimseitigen Wänden (18) des Spüleinsatzes (16) je ein mit der Eingangsöffnung (13) verbundener Austrittskanal (21) für das Spülmedium angeordnet ist, der parallel zum Partikelführungskanal (19) verläuft und quer an den Meßfenstern (4; 5) vorbeiführt.

5. Meßsonde nach Anspruch 4, **gekennzeichnet durch** in den Austrittskanälen (21) für das Spülmedium vorgesehene Drosseldüsen (22), deren Querschnittsverengungen - in Richtung der Strömung des Spülmediums gesehen - jeweils vor den Meßfenstern (4; 5) angeordnet sind.

6. Meßsonde nach Anspruch 1, **dadurch gekennzeichnet, daß** die Quelle des Spülmediums einen geeigneten Überdruck des Spülmediums relativ zum Druck des die Partikel führenden Mediums erzeugt

7. Meßsonde nach den Ansprüchen 1 bis 6, **dadurch gekennzeichnet, daß** das Spülmedium aus einem Druckgas, aus einer Druckflüssigkeit oder aus einem mit einer Druckflüssigkeit versetzten Druckgas (bzw. umgekehrt) besteht.

8. Meßsonde nach Anspruch 7, **gekennzeichnet durch** die Anwendung von Druckluft als Spülmedium.

9. Meßsonde nach Anspruch 1 bis 8, **dadurch gekennzeichnet, daß** im Kanal (14) für die Zuleitung des Spülmediums ein Rückschlagventil angeordnet ist.

## Claims

1. Measuring probe for the in-line determination of the size of moving particles in transparent media, with a tube-shaped measuring probe body which, in the area of its front end located in the measurement area, has a break-through, open on one side and with parallel walls, to take an optical
measuring point with two measuring windows, consisting of a lighting device positioned in one break-through wall and a light receiver assembly provided in the beam pathway in the opposite break-through wall, which assembly is connected with an opto-electronic converter assembly, whereby the particle flow is between
the lighting device and the light receiver assembly, using a rinsing device to clean the optical measuring point, whereby the rinsing device consists of a source of a rinsing medium, a duct leading on the inside of the tube-shaped measuring probe body to the break-through for the conveyance of the rinsing medium and
outlet openings in the area of the break-through,
**characterised by** a rinsing unit (9; 16) which can be used, fixed and interchanged in the parallel-walled break-through (3), and which in the axial section through the tube-shaped measuring probe body (1) in the area of the break-through (3) partly or fully completes its cross-section,
and which furthermore possesses an intake opening (13) linked with the source of a rinsing medium via the duct (14) and the output opening (7) leading crossways to the measuring windows (4; 5) of the optical measuring point and two outlet openings (15; 21) connected with this for the rinsing medium which each run crossways to the measuring windows (4; 5) from the lighting device and light receiver assembly.

2. Measuring probe according to Claim 1, **characterised in that** the rinsing unit (9), with partial cross-sectional completion of the tube-shaped measuring probe body (1), possesses, in the area of the break-through (3), an inner limiting surface (10) which contains the entrance opening (13) and which adjoins the inner surface (3.3) of the parallel-walled breakthrough (3) and which has an outer limiting surface (11) running parallel to this whose central distance from the longitudinal axis of the tube-shaped measuring probe body (1)
is smaller than the central distance of the light receiver assembly, whereby in both end walls (12) of the rinsing unit (9) an outlet duct (15) connected with the entrance opening (13) is provided for the rinsing medium, the outlet opening of which in each case determines a jet direction of the rinsing jet (8) which includes an acute angle to the direction of the particle flow (2).

3. Measuring probe according to Claim 2, **characterised in that** the parallel running outer limiting surface (11) of the rinsing unit (9) is profiled in parallel to the particle flow (2).

4. Measuring probe according to Claim 1, **characterised in that** the rinsing unit (16), with complete cross-sectional completion of the tube-shaped measuring probe body (1), possesses, in the area of the break-through (3), an inner limiting surface (10) which contains the entrance opening (13) and which adjoins the inner surface (3.3) of the parallel-walled breakthrough (3) and has a cross-sectional completing outer limiting surface (17), whereby the rinsing unit (16) has a particle guide duct (19) penetrating this, parallel to the inner limiting surface (10) and aligned crossways to the direction of effect of the measurement windows (4; 5) of the lighting device and
light receiver assembly, and which in each case has openings (23) in the area of the measuring windows (4; 5), assigned to them, penetrating the rinsing unit (16), whereby in the two end walls (18) of the rinsing unit (16) an outlet duct (21) connected with the entrance opening (13) is provided for the rinsing medium, which runs parallel to the particle
guide duct (19) and runs crossways past the measuring windows (4; 5).

5. Measuring probe according to Claim 4, **characterised by** throttle nozzles (22) provided in the outlet ducts (21) for the rinsing medium, whose cross-sectional narrowing - seen in the direction of the flow of the rinsing medium - are located in each case in front of the measurement windows (4; 5)

6. Measuring probe according to Claim 1, **characterised in that** the source of the rinse medium produces a suitable gauge pressure of the rinse medium in relation to the pressure of the medium taking the particles.

7. Measuring probe according to Claims 1 to 6, **characterised in that** the rinse medium consists of a pressurised gas, a pressurised liquid or a pressurised gas diluted with a pressurised fluid (or vice versa).

8. Measuring probe according to Claim 7, **characterised by** the use of compressed air as a rinsing medium.

9. Measuring probe according to Claims 1 to 8, **characterised in that** a non-return valve is located in the duct (14) for the forwarding of the rinsing medium.

## Revendications

1. Sonde de mesure permettant de déterminer en ligne la taille de particules en mouvement dans des fluides transparents au moyen d'un corps de sonde de mesure tubulaire qui présente, dans la zone de son extrémité frontale dans l'espace de mesure, un percement ouvert d'un côté, à parois parallèles pour la réception d'un point de mesure optique avec deux fenêtres de mesure, composé d'un système d'éclairage placé dans une paroi du percement et d'un dispositif récepteur de lumière prévu, dans le trajet du faisceau, dans la paroi de percement en face et relié à un transducteur optoélectronique, le passage de particules se
trouvant entre le système d'éclairage et le dispositif récepteur de lumière, avec l'utilisation d'un système de rinçage pour le nettoyage du point de mesure optique, le système de rinçage étant composé d'une source d'un fluide de rinçage, d'un canal situé à l'intérieur du corps de sonde de mesure tubulaire, allant jusqu'au percement pour l'amenée du fluide de rinçage et d'orifices de sortie dans la zone du percement. Ce système de rinçage est **caractérisé par** un embout de rinçage (9; 16) pouvant être inséré, fixé et remplacé dans le percement à parois parallèles (3), en coupe axiale par le corps de sonde de mesure tubulaire (1) dans la zone du percement (3), dont la section transversale est complétée partiellement ou intégralement,
possédant, par ailleurs, un orifice d'entrée (13) en liaison avec la source d'un fluide de rinçage par le canal (14) et l'orifice de sortie (7) débouchant perpendiculairement aux fenêtres de mesure (4; 5) du point de mesure optique ainsi que 2 orifices de sortie (15; 21) reliés à ce dernier pour le fluide de rinçage et placés de façon perpendiculaire aux fenêtres de mesure (4; 5) du système d'éclairage et du dispositif récepteur de lumière.

2. Sonde de mesure suivant la revendication 1, **caractérisée par le fait que** l'embout de rinçage (9) présente, en cas de complément partiel de la section du corps de sonde de mesure tubulaire (1) dans la zone du percement (3), une surface limite intérieure (10) présentant l'orifice d'entrée (13) et adjacente à la surface intérieure (3.3) du percement à parois parallèles (3) ainsi qu'une surface limite extérieure (11) parallèle à la surface intérieure et dont l'entraxe à l'axe longitudinal du corps de sonde de mesure tubulaire (1) est plus petit que l'entraxe du dispositif récepteur de lumière, un canal de sortie (15) relié à l'orifice d'entrée (13) étant prévu, pour le fluide de rinçage, sur chacune des deux parois côté frontal (12) de l'embout de rinçage (9) ; l'orifice de sortie de ce canal définit respectivement chaque direction du jet de rinçage (8), incluant un angle aigu pour la direction du passage de particules (2).

3. Sonde de mesure suivant la revendication 2, **caractérisée par le fait que** la surface limite extérieure parallèle (11) de l'embout de rinçage (9) est profilée parallèlement au passage de particules (2).

4. Sonde de mesure suivant la revendication 1, **caractérisée par le fait que** l'embout de rinçage (16) présente, en cas de complément intégral de la section du corps de sonde de mesure tubulaire (1) dans la zone du percement (3), une surface limite intérieure (10) présentant l'orifice d'entrée (13) et adjacente à la surface intérieure (3.3) du percement à parois parallèles (3) ainsi qu'une surface limite extérieure (17) complétant la section, l'embout de rinçage (16) possédant un canal de guidage des particules (19) pénétrant dans ce dernier, parallèle à la surface limite intérieure (10) et en ligne perpendiculaire au sens d'action des fenêtres de mesure (4; 5) du système d'éclairage et du dispositif récepteur de lumière ; ce canal de guidage des particules possède, dans la zone de chacune des fenêtres de mesure (4; 5), des orifices (23) affectés à ces dernières, pénétrant dans l'embout de rinçage (16), moyennant quoi un orifice de sortie (21) relié à l'orifice d'entrée (13) est placé pour le fluide de rinçage sur les deux parois côté frontal (18) de l'embout de rinçage (16) ; ce canal de sortie est parallèle au canal de guidage des particules (19) et perpendiculaire aux fenêtres de mesure (4; 5).

5. Sonde de mesure suivant la revendication 4, caractérisée, dans les canaux de sortie (21), par des tuyères de mesure (22) prévues pour le fluide de rinçage et dont les rétrécissements de section - vu dans le sens de l'écoulement du fluide de rinçage - sont placés devant chaque fenêtre de mesure (4; 5).

6. Sonde de mesure suivant la revendication 1, **caractérisée par le fait que** la source du fluide de rinçage produit une surpression appropriée du fluide de rinçage, relative à la pression du fluide acheminant les particules.

7. Sonde de mesure suivant les revendications 1 à 6, **caractérisée par le fait que** le fluide de rinçage est composé d'un gaz comprimé, d'un liquide sous pression ou d'un gaz comprimé mélangé à un liquide sous pression (et/ou vice versa).

8. Sonde de mesure suivant la revendication 7, **caractérisée par** l'utilisation d'air comprimé comme fluide de rinçage.

9. Sonde de mesure suivant les revendications 1 à 8, **caractérisée par le fait qu'**un clapet antiretour est prévu dans le canal (14) d'amenée du fluide de rinçage.
